# EUROPÄISCHE PATENTSCHRIFT

(11) **EP 0 382 794 B1**
(45) Veröffentlichungstag und Bekanntmachung des Hinweises auf die Patenterteilung: **18.05.1994**
(21) Anmeldenummer: 89902235.4
(22) Anmeldetag: 17.02.1989
(51) Int. Cl.: G06F 11/16, G06F 11/00

(54) **NETZWERKSCHNITTSTELLE**
NETWORK INTERFACE
INTERFACE DE RESEAU

(30) Priorität: 06.08.1988 DE 3826774
(43) Veröffentlichungstag der Anmeldung: 22.08.1990
(73) Patentinhaber: ROBERT BOSCH GMBH, 70442 Stuttgart (DE)
(72) Erfinder: PETER, Cornelius, D-7583 Ottersweier (DE)
(86) Internationale Anmeldenummer: DE8900093
(87) Internationale Veröffentlichungsnummer: WO9001739

(56) Entgegenhaltungen:
- EP-A- 0 014 757
- DE-A- 3 506 118
- US-A- 3 579 120
- US-A- 4 245 344
- US-A- 4 328 583
- US-A- 4 792 950

## Beschreibung

### Stand der Technik

Die Erfindung geht aus von einer Netzwerkschnittstelle nach der Gattung des Hauptanspruchs.

Netzwerkschnittstellen sind beispielsweise in der Computertechnik weit verbreitet. Aus der DE-A-35 06 118 sind Controller-Area-Network-Schnittstellen für Kraftfahrzeuge bekannt, die eine Vielzahl vom Komponenten, Subsystemen und/oder Systemen verbinden. Die Informationen des Netzwerks laufen über zwei Busleitungen. Jeder Ausfall einer der beiden Busleitungen durch Kurzschluß oder Unterbrechung hat zur Folge, daß das gesamte Netzwerk zusammenbricht.

Aus der US-A-4,972,950 ist ein Schnittstellenbaustein bekannt, der zum Empfang und zur Absendung von Daten über eine Zweidraht-Busverbindung ausgelegt ist. Der Empfangsteil besitzt drei Kanäle mit jeweils einem Komparator. Ein Kanal ist für den Differenzempfang über die Zweidrahtverbindung und die beiden anderen Kanäle jeweils zum Empfang über die verbleibenden Eindrahtverbindungen ausgelegt. Die Entscheidung, welcher der drei Empfangskanäle benutzt wird, wird nach Analyse der Komparatorausgänge der drei Empfangskanäle durch eine Auswertelogik getroffen. Vor dem eigentlichen Eintreffen von Informationen wird bei dem System ein "Start-of-Message"-Bitmuster gesendet. Es wird für alle drei Kanäle gleichzeitig überprüft, ob das "Start-of-Message"-Bitmuster korrekt empfangen wurde. Abhängig von dieser Überprüfung wird dann von einer Auswertelogik eine Entscheidung getroffen, welcher der drei Kanäle anschließend für den Informationsempfang gewählt wird.

Aus der US-A-4,245,344 ist eine Datenverarbeitungsanlage bekannt, bei der mindestens ein Prozessor mit einer Anzahl von Speichermodulen verbunden ist. Zur Verbindung sind zwei gleichwertige Datenbusse vorgesehen. Jeder Prozessor und jedes Modul ist so ausgelegt, daß ein Datenempfang über beide Busse gleichzeitig stattfinden kann. Dabei werden sicherheitshalber über beide Busse die gleichen Informationen übertragen. Der Empfänger der Informationen wertet die empfangenen Informationen aus, prüft sie auf Fehlerfreiheit, vergleicht sie miteinander und entscheidet dann, von welchem Datenbus er jeweils die Information weiterverarbeitet.

Die EP-A-0 014 757 betrifft einen überwachungsschaltkreis für die Spannungsversorgung einer Datenverarbeitungsanlage. Dabei wird mit Hilfe eines Komparators das gleichgerichtete Wechselspannungssignal der Stromversorgung mit einem Referenzspannungssignal verglichen. Der Komparator gibt bei Abweichungen ein Startsignal auf einen Zähler. Dadurch wird der Zähler ab einem Referenzwert gestartet. Der Zähler wird dann kontinuierlich aufwärtsgezählt. Wenn der Zähler einen bestimmten Zählwert erreicht, wird von einer Decoder-Schaltung ein Störungssignal an die Datenverarbeitungsanlage abgegeben. Das Störungssignal wird auch einer Hilfsspannungsquelle zugeführt. Durch das Störungssignal wird die Sicherung der Daten, die in einem flüchtigen Speicher aufbewahrt sind, veranlaßt.

### Vorteile der Erfindung

Die erfindungsgemäße Schnittstelle mit den im Anspruch 1 aufgeführten Merkmalen hat demgegenüber den Vorteil, daß bei ihr die Datensicherheit bei der Übertragung von Informationen zwischen Teilnehmerstationen eines lokalen Netzwerkes erhöht ist. Es wird nämlich der gesamte Informationsfluß über den Bus einer Überprüfung unterzogen. Weiterhin ist vorteilhaft, daß der Schaltungsaufwand für die Überwachung der Busleitungen gering ist. Er beschränkt sich auf die Umschaltlogik zur Umschaltung von Zweidrahtempfang auf Eindrahtempfang und die Referenzspannungsquelle.

Bevorzugt wird ein erstes Ausführungsbeispiel, bei dem die Überwachungsschaltung ein den Busleitungen zugeordneten Zähler aufweist. Dieser Zähler kann jedoch auch in Software realisiert sein. Dieser Zähler ist so ausgelegt, daß er während des Betriebs aufwärts zählt. Durch auf den Busleitungen eintreffende Informationen wird er zurückgesetzt. Treffen auf den Signalleitungen keine verwertbaren Informationen mehr ein, so wird der Zähler nicht mehr zurückgesetzt und zählt weiter. Bei Erreichen des vorgebbaren Zählerstands wird dann die Notlaufschaltung aktiviert, die dann auf einen Eindrahtbetrieb umschaltet.

Bei einem weiteren Ausführungsbeispiel ist den Busleitungen mindestens ein Fensterkomparator zugeordnet, der die an den Busleitungen liegende Spannung erfaßt. Sobald das Potential außerhalb einer vorgegebenen Spanne liegt, wird von dem Fensterkomparator ein Steuersignal an die Notlaufschaltung abgegeben, die dann den Eindrahtbetrieb einstellt.

Vorzugsweise wird den Busleitungen bei diesem Ausführungsbeispiel ein vorgegebenes Potential zugeordnet, das sich von den übrigen im Netzwerk bzw. Kraftfahrzeug vorkommenden Potentialen unterscheidet. Dadurch sind Unterbrechungen, Kurzschlüsse oder Verbindungen mit einer Spannungsquelle des Netzwerks sowie eingekoppelte Störungen besonders leicht erkennbar.

Durch die in den Unteransprüchen aufgeführten Maßnahmen sind vorteilhafte Weiterbildungen und Verbesserungen der im Hauptanspruch angegebenen Netzwerkschnittstelle möglich. Besonders vorteilhaft ist es, daß die Schnittstelle nicht nur zur Aufrechterhaltung des Schnittstellenbetriebes bei Ausfall einer Leitung verwendbar ist, sondern daß auch, aufgrund der Signalredundanz, die Störsicherheit verbessert wird. Dadurch ergibt sich eine hohe Verfügbarkeit der Schnittstelle.

### Zeichnung

Zwei Ausführungsbeispiele der Erfindung sind in der Zeichnung dargestellt und werden in der nachfolgenden Beschreibung näher erläutert. Es zeigen:
Figur 1 eine Schnittstelle nach dem Stand der Technik zur Erläuterung des Grundprinzips;
Figur 2 den Verlauf der an den Bus- bzw. Signalleitungen anliegenden Potentiale sowie ein Differenzsignal;
Figur 3 den Spannungsverlauf am Eingang der Empfänger- bzw. Signalauswertungsschaltung eines Netzwerkteilnehmers, die einen Komparator aufweist;
Figur 4 ein erstes Ausführungsbeispiel einer erfindungsgemäßen Zusatzbeschaltung einer Schaltung gemäß Figur 1;
Figur 5 ein zweites Ausführungsbeispiel einer Zusatzbeschaltung einer Schaltung gemäß Figur 1;
Figur 6 ein Schaltbild eines weiteren Ausführungsbeispiels der Netzwerkschnittstelle und
Figur 7 ein Prinzipschaltbild der Schnittstelle gemäß Figur 6.

### Beschreibung der Ausführungsbeispiele

Die im folgenden beschriebene Schnittstelle ist allgemein für Computernetzwerke verwendbar, insbesondere zur Verbindung einer Vielzahl Von Komponenten, Subsystemen und/oder Systemen, wie sie auch bei Fertigungsstraßen Verwendung finden. Insbesondere ist die Schnittstelle als sogenannte Controller-Area-Network-Schnittstelle (CAN-Schnittstelle) für Kraftfahrzeuge geeignet. Anhand dieses Beispiels soll auch die folgende Beschreibung erfolgen.

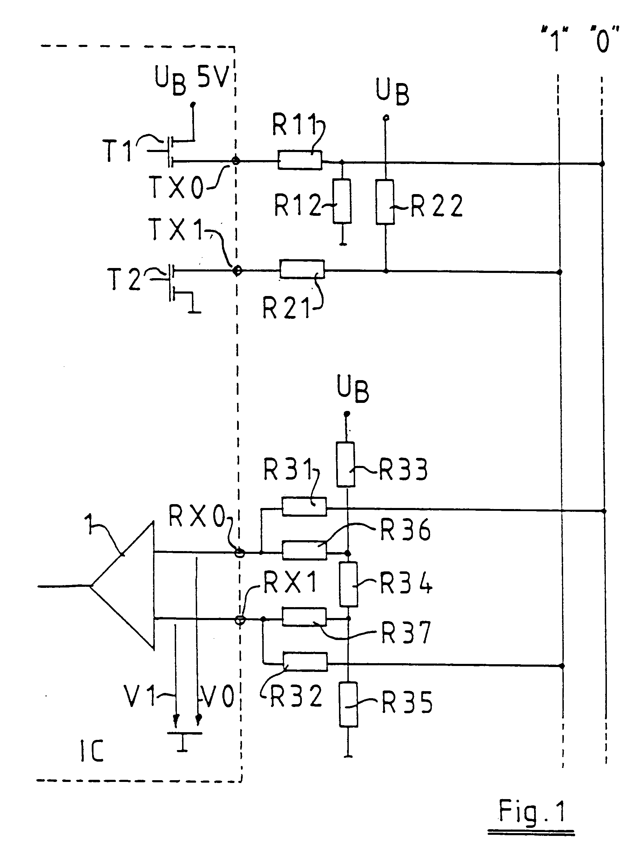

Zum besseren Verständnis des Grundprinzips wird in den Figuren 1 bis 3 auf eine bekannte Schnittstelle sowie auf die bei dieser Schaltung vorhandenen Signale eingegangen, wobei davon ausgegangen werden soll, daß vorzugsweise serielle Datenübertragung erfolgt.

Figur 1 zeigt eine Netzwerkschnittstelle, wobei zur besseren Übersichtlichkeit lediglich ein Teilnehmer auf einem CAN-IC, dessen externe Beschaltung sowie zwei Signal- bzw. Bus-Leitungen dargestellt sind. Der Teilnehmer weist eine erste Treiberstufe T1 auf, die der Busleitung "0" zugeordnet ist. Zur Vereinfachung ist hier lediglich ein elektronischer Schalter der Treiberstufe dargestellt, der einerseits mit der Versorgungsspannung U_{B} von +5V verbunden ist und andererseits mit der Ausgangsklemme TX0 des CAN-IC's. Die Klemme ist über einen ersten Widerstand R11 mit der Signalleitung "0" verbunden. Über einen zweiten Widerstand R12 liegt die Verbindungsleitung zwischen dem ersten Widerstand R11 und der Signalleitung "0" an Masse. Wenn die Treiberstufe T1 hochohmig ist, liegt also die Busleitung "0" auf Masse, ist die Treiberstufe T1 niederohmig, liegt die Busleitung "0" an U_{B}.

Eine zweite Treiberstufe T2, von der zur Vereinfachung ebenfalls lediglich ein elektronischer Schalter dargestellt ist, liegt an der Ausgangsklemme TX1 des CAN-IC's. Der elektronische Schalter liegt einerseits an Masse und andererseits an der Ausgangsklemme TX1. Diese ist über einen Widerstand R21 mit der Busleitung "1" verbunden, wobei die Verbindungsleitung über einen Widerstand R22 an der Versorgungsspannung U_{B} von +5V liegt. Ist also die Treiberstufe T2 hochohmig, liegt die Busleitung "1" an U_{B}, ist sie niederohmig, an Masse. Die Treiberstufen T1 und T2 sind also invers geschaltet

Über die Treiberstufen werden Signale des Busteilnehmers an die Bus- bzw. Signalleitungen "1" und "0" abgegeben.

An den Klemmen RX0 und RX1 des IC's ist eine Signalauswertungs- bzw. Emfängerschaltung angeschlossen, die einen Komparator 1 aufweist, der mit den Klemmen RX0 und RX1 des IC's verbunden ist. Die Empfängerschaltung setzt die Signale um, die auf den Busleitungen für den Teilnehmer eintreffen. Die Klemme RX0 ist daher über einen Widerstand R31 mit der Busleitung "0" und die Anschlußklemme RX1 über einen Widerstand R32 mit der Busleitung "1" verbunden. Die Klemmen sind überdies mit einem zwischen der Versorgungsspannung U_{B} und Masse liegenden Spannungsteiler verbunden, der die Widerstände R33, R34 und R35 aufweist. Die Verbindungsstelle der Widerstände R33 und R34 ist über einen Widerstand R36 mit der Klemme RX0 und die Verbindungsstelle der Widerstände R34 und R35 über einen Widerstand R37 mit der Klemme RX1 verbunden.

Bei dem hier dargestellten Ausführungsbeispiel werden für die Widerstände R11, R12, R21 und R22 Widerstandswerte von 1kΩ gewählt. Die Treiberstufen T1 und T2 sind also hochohmig an die Busleitungen "1" und "0" angekoppelt. Die Anschlußklemmen RX0 und RX1 sind über 100kΩ an die Busleitungen angekoppelt. Der Spannungsteiler dient der Grundeinstellung und der Symmetrierung des Komparators 1. R33 und R35 haben Werte von 1kΩ, R36 und R37 von 15kΩ und R34 von 180Ω. Auf diese Weise ergibt sich für die Eingangsklemme RX0 ein Grundpotential von ca. 2,7V und für die Eingangsklemme RX1 ein Eingangspotential von ca. 2,3V.

Die an den Eingängen des Komparators 1 der Empfängerschaltung bzw. an den Eingangsklemmen RX0 und RX1 anliegenden Potentiale werden mit V0 und V1 bezeichnet.

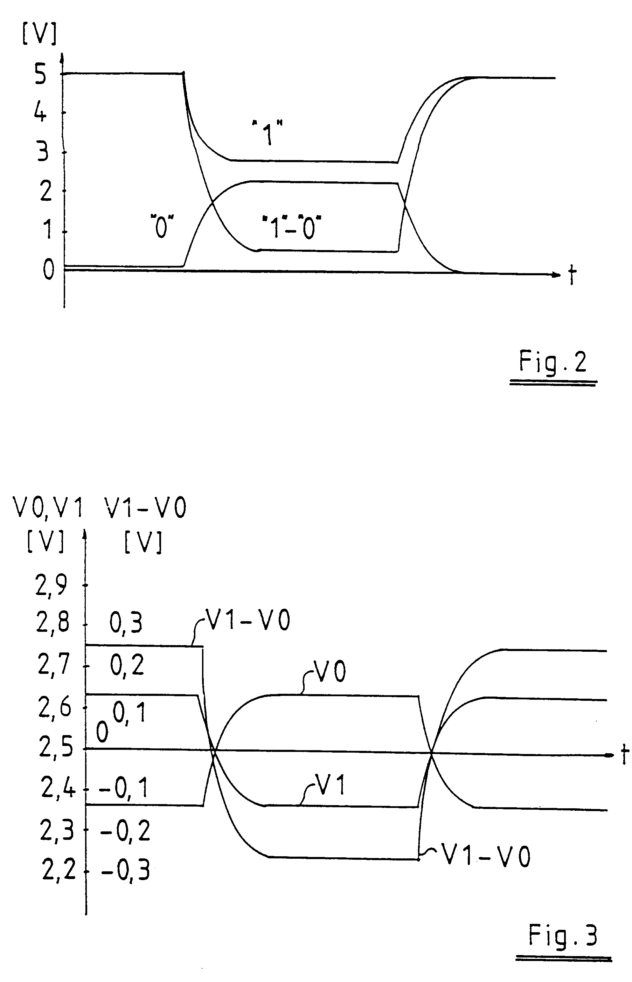

Aus Figur 2 sind die an den Busleitungen anliegenden Signale ersichtlich. Außer den Bussignalen ist die Differenz der Bussignale dargestellt, wobei das Signal an der Busleitung "1" von dem an der Busleitung "0" abgezogen wird. Wenn das Signal an der Busleitung "1" den Wert NULL annimmt, ergibt sich ein Potential von ca. 2,7V. Wenn das Signal an der Busleitung "0" den Wert EINS annimmt, so ergibt sich ein Potential von ca. 2,3V. Die Signale EINS und NULL auf den Busleitungen werden von entsprechenden Treiberstufen der Netzwerk-Teilnehmer erzeugt. Durch die hochohmige Ankopplung der Treiberstufen, die gemäß Figur 1 durch die Widerstände R11 und R21 sichergestellt ist, ergeben sich die abgerundeten Flanken der Bussignale, wie sie in Figur 2 dargestellt sind. Durch die Kopplungswiderstände ergeben sich mit den Leitungskondensatoren entsprechende RC-Glieder. Ein derartiger Potentialverlauf wird zur Vermeidung von Störungen gewählt, die durch die Einspeisung der Signale der Treiberstufen hervorgerufen werden können.

In Figur 3 sind die an den Eingängen des Eingangskomparators bzw. an den Klemmen RX0 und RX1 anliegenden Potentiale V0 und V1 dargestellt. Außerdem ist die Differenz V1-V0 eingezeichnet. Der Komparaor schaltet bei der vorliegenden Wahl der Beschaltungselemente von ca. +0,3V auf ca. -0,3V, je nachdem, ob die Differenz VO-V1 positiv oder negativ ist. Wichtig ist, daß das Differenzsignal die Nullinie schneidet. Wenn dies nicht der Fall ist, kippt der Komparator nicht mehr.

Bei Ausfall einer der beiden Signalleitungen durch Kurzschluß nach Masse oder U_{B}, durch Unterbrechungen sowie durch eingekoppelte Störungen, beispielsweise durch Defekt einer Treiberstufe, wird das Differenzsignal so verzerrt, daß es nicht mehr die Nullinie schneidet. Die Signalauswertungsschaltung bzw. der Eingangskomparator dieser Schaltung ist dann nicht mehr in der Lage, die Eingangsspannungen korrekt auszuwerten.

Aus der Darstellung in Figur 3 ist ersichtlich, daß die absolute Höhe der Potentiale auf das Differenzsignal keinen Einfluß hat. Sogenannte Gleichtaktstörungen, die beispielsweise auf einem Masseversatz des Teilnehmers selbst oder eines anderen Systems beruhen, werden also unterdrückt.

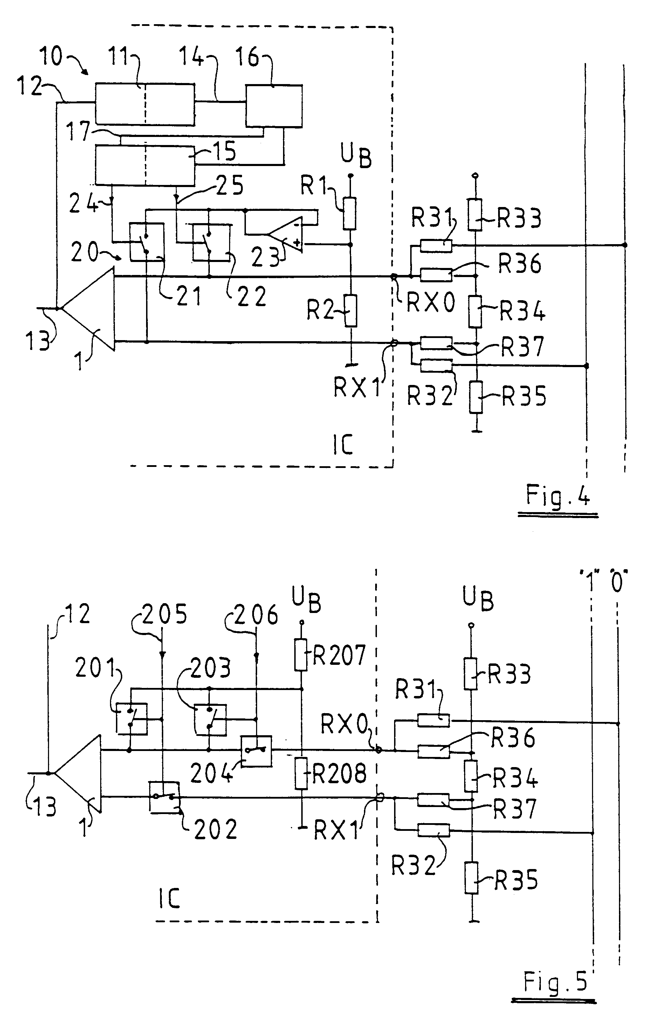

Figur 4 zeigt eine erste Überwachungsschaltung, die fehlerhafte Signalleitungen erfaßt und im Fehlerfall eine Notlaufschaltung aktiviert. Durch eine gestrichelte Linie ist ein CAN-IC angedeutet, der dieselbe Beschaltung wie der in Figur 1 hat. Hier in Figur 4 sind aus Gründen der Übersichtlichkeit die Treiberstufen weggelassen. Überwachungsschaltung und Notlaufschaltung sind also zwischen die Klemmen RX0 und RX1 des IC's und die Eingangsklemmen des Komparators 1 der Empfängerschaltung geschaltet.

Die Überwachungsschaltung 10 umfasst einen Zähler 11, der über eine Leitung 12 mit dem Ausgang 13 des Komparators 1 verbunden ist. Der Zähler ist so ausgelegt, daß er im Betrieb ständig aufwärts zählt. Wenn auf dem Ausgang 13 Informationen eintreffen, wird der Zähler rückgestellt. Am Ausgang 13 des Komparators 1 treffen nur Informationen ein, wenn die beiden Signal- bzw. Busleitungen "0" und "1" ordnungsgemäß funktionieren.

Wenn durch einen Fehlerfall, beispielsweise durch Kurzschluß oder Unterbrechung, keine Informationen auf den Busleitungen eingehen, so wird der Zähler nicht mehr zurückgesetzt. Der Zählvorgang wird dadurch fortgesetzt, bis ein vorgegebener Zählerstand erreicht ist. Sobald dieser Zählerstand erreicht ist, wird über eine Leitung 14 ein Signal "ERROR STATUS" abgegeben und eine die Notlaufschaltung 20 steuernde Steuerschaltung angesteuert. Diese kann beispielsweise als Register, als sogenanntes Statusregister 15 ausgelegt sein.

Die Notlaufschaltung 20 umfasst einen ersten, z.B. als FET-Schalter ausgebildeten Analogschalter 21 sowie einen zweiten, ebenfalls als FET-Schalter ausgebildeten Analogschalter 22. Beide Schalter sind einerseits mit einer Notlauf-Spannung U_{B}/2 verbunden. Diese Notlauf-Spannung wird durch einen zwischen der Versorgungsspannung und Masse liegenden Spannungsteiler aus R1 und R2 gewonnen. Im vorliegenden Beispiel ist ein Impedanzwandler 23 zur niederohmigen Ankopplung vorgesehen. Der erste Analogschalter 21 liegt andererseits an der Klemme RX1, also an einem ersten Eingang des Komparators 1. Der zweite Analogschalter 22 liegt andererseits an der Klemme RX0 bzw. an einem zweiten Eingang des Komparators 1. Die Analogschalter 21 und 22 werden über eine Ansteuerleitung 24 bzw. 25, die mit dem Statusregister 15 verbunden ist, angesteuert.

Im folgenden wird auf die Ansteuerung der Notlauf-Schaltung 20 noch genauer eingegangen:
Sobald der Zähler 11, der durch Hardware oder auch Software realisiert werden kann, den vorgegebenen, einen Fehler anzeigenden Zählerstand erreicht, gibt er über die Leitung 14 ein Signal "ERROR STATUS" an eine zentrale Rechnereinheit 16 (CPU) ab. Anhand dieses Signals erkennt die CPU 16, daß auf den Busleitungen ein Fehler eingetreten ist. Per Definition kann zum Beispiel festgelegt werden, daß eine ununterbrochene Sequenz von sechs Einsern auf einer der Signalleitungen als Fehler gedeutet wird.

Die CPU 16 steuert bei Eintreffen des Signals ERROR STATUS zunächst das Statusregister 15 über eine Leitung 17 so an, daß ein sogenanntes STATUS BIT über die Leitung 24 an den ersten Analogschalter 21 abgegeben wird. Dadurch wird an den mit der Klemme RX1 verbundenen Eingang des Komparators 1 die Notlauf-Spannung U_{B}/2 gelegt. Wenn nun wieder Informationen auf dem Ausgang 13 des Komparators 1 eintreffen und der Zähler 11 rechtzeitig vor Erreichen des vorgegebenen Zählerstands rückgesetzt wird, ist ein Fehler auf der Busleitung "1" lokalisiert. Der Komparator kann nun im Eindraht-Betrieb arbeiten und Informationen auf der Busleitung "0" korrekt auswerten. Allerdings ist in diesem Betriebszustand die Unterdrückung von Gleichtaktstörungen nicht mehr gegeben.

Tritt auch nach der Ansteuerung des ersten Analogschalters 21 das Signal ERROR STATUS auf, wird also der Zähler 11 nicht rechtzeitig zurückgesetzt, steuert die CPU 16 über eine Leitung 18 das Statusregister 15 an, das daraufhin über die Leitung 25 ein STATUS BIT an den zweiten Analogschalter 22 abgibt. Dadurch wird der mit der Klemme RX0 verbundene Eingang des Komparators 1 mit der Notlauf-Spannungsquelle verbunden. Wenn nun am Ausgang 13 des Komparators 1 wieder verwertbare Informationen eintreffen und der Zähler 11 rechtzeitig rückgesetzt wird, ist die Busleitung "0" fehlerhaft. Der Komparator 1 kann also durch Ansteuerung des zweiten Analogschalters 22 im Eindraht-Betrieb auf der Busleitung "1" eintreffende Informationen korrekt auswerten.

Bei dem in Figur 4 dargestellten Ausführungsbeispiel sind sowohl die Überwachungsschaltung 10 als auch die Notlaufschaltung 20 auf dem CAN-IC angeordnet.

Die übrigen in Figur 4 dargestellten Bauelemente entsprechen denen in Figur 1. Sie sind mit gleichen Bezugszeichen bzw. Bezeichnungen versehen. Auf ihre Beschreibung kann hier also verzichtet werden. Es ist ersichtlich, daß die Klemme RX0 des CAN-IC's mit der Busleitung "0" verbunden ist und die Klemme RX1 mit der Busleitung "1".

In Figur 5 ist ein weiteres Ausführungsbeispiel der Notlaufschaltung dargestellt. Die Überwachungsschaltung entspricht der in Figur 4. Sie ist hier aus Gründen der besseren Übersichtlichkeit nicht dargestellt.

Die Notlaufschaltung 200 weist hier einen ersten Analogschalter 201 und einen zweiten Analogschalter 202 auf. Beide sind der Klemme RX1 zugeordnet, die mit der ersten Busleitung "1" verbunden ist. Die Notlaufschaltung 200 weist überdies einen dritten Analogschalter 203 sowie einen vierten Analogschalter 204 auf, die beide der Klemme RX0 zugeordnet sind, die ihrerseits mit der Busleitung "0" verbunden ist. Die der Klemme RX1 zugeordneten Analogschalter 201 und 202 sind über eine Leitung 205 mit dem zugehörigen, hier nicht dargestellten Statusregister verbunden. Die der Klemme RX0 zugeordneten Analogschalter 203 und 204 sind über eine Leitung 206 mit dem zugehörigen Statusregister verbunden.

Die durch zwei Leitungen paarweise angesteuerten Analogschalter 201 und 202 bzw. 203 und 204 sind komplementär ausgelegt, das heißt der erste Analogschalter 201 ist, ebenso wie der dritte Analogschalter 203 als Schließer ausgelegt, während der zweite Analogschalter 202 bzw. der vierte Analogschalter 204 als Öffner ausgelegt sind. Insgesamt wird hier eine Umschaltfunktion realisiert.

Der erste Analogschalter 201 ist einerseits mit einer Notlauf-Spannung U_{B}/2 und andererseits mit dem Eingang des Komparators 1 verbunden. In der Verbindungsleitung zwischen dem Komparator 1 und der Klemme RX1 liegt der zweite, als Öffner ausgelegte Analogschalter 202. Der dritte Analogschalter 203 ist entsprechend mit seiner einen Seite mit der Notlauf-Spannungsquelle U_{B}/2 verbunden und andererseits mit dem zweiten Eingang des Komparators 1. In der Verbindungsleitung dieses Eingangs mit der Klemme RX0 ist der vierte, als Öffner ausgelegte Analogschalter 204 angeordnet.

Bei einem Fehler auf einer der Busleitungen wird zunächst auf der Leitung 205 das sogenannte STATUS BIT abgegeben, durch welches der erste Analogschalter 201 und der zweite Analogschalter 202 angesteuert werden. Dadurch wird einerseits die Verbindung des Komparators 1 zur Klemme RX1 getrennt und andererseits die der Klemme RX1 zugeordnete Eingangsklemme der Komparators 1 mit der Notlauf-Spannungsquelle verbunden. Wenn nun am Ausgang 13 des Komparators 1 wieder auswertbare Signale eintreffen, ist ein Fehler auf der Busleitung "1" lokalisiert. Der Komparator wertet nun im Eindrahtbetrieb Informationen auf der Busleitung "0" aus.

Wird durch die Überwachungsschaltung jedoch festgestellt, daß weiterhin am Ausgang 13 des Komparators 1 Fehler auftreten, so werden der dritte Analogschalter 203 und der vierte Analogschalter 204 durch ein STATUS BIT auf der Leitung 206 aktiviert, so daß der Komparator 1 von der Signalleitung "0" getrennt und statt dessen mit der Notlauf-Spannungsquelle verbunden wird.

Bei diesem Ausführungsbeispiel wird durch einen Spannungsteiler mit den Widerständen R207 und R208, die zwischen der Spannung U_{B} und Masse liegen, die Notlauf-Spannung U_{B}/2 erzeugt.

Die Verbindung der Klemme RX0 mit der Signalleitung "0" und die der Klemme RX1 mit der Signalleitung "1" ist identisch wie in Figur 1. Gleiche Teile sind wiederum mit gleichen Bezugszeichen bzw. Bezeichnungen versehen, so daß auf deren Beschreibung hier verzichtet werden kann.

Die in den Figuren 4 und 5 dargestellten Ausführungsbeispiele zeichnen sich dadurch aus, daß die Überwachungsschaltung software-gesteuert ist.

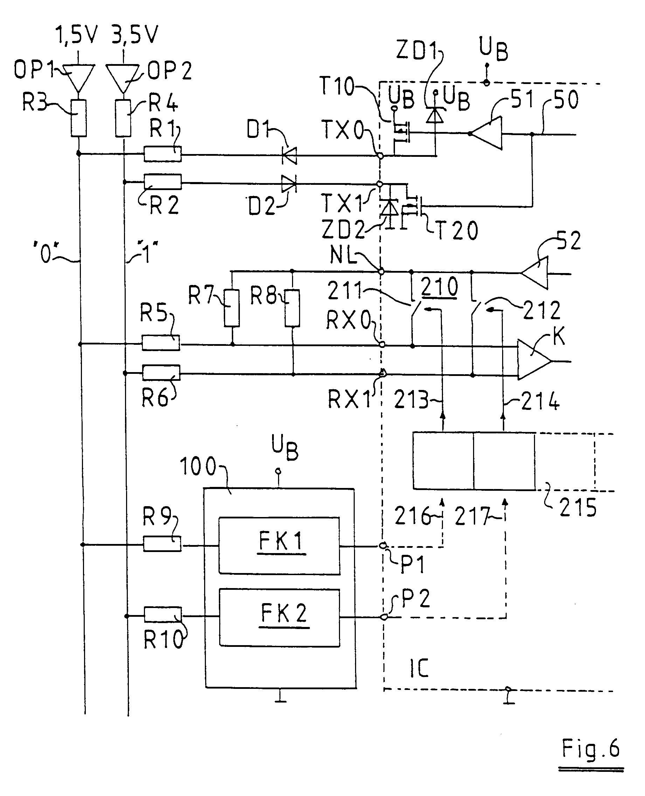

Figur 6 zeigt ein weiteres Ausführungsbeispiel einer Überwachungsschaltung 100, die eine Notlaufschaltung 210 steuert. Dieses Ausführungsbeispiel zeichnet sich dadurch aus, daß die Notlaufeigenschaften durch Hardware erreicht werden.

Das Schaltbild gemäß Figur 6 zeigt mit gestrichelter Umrandung einen CAN-IC, auf dem beispielshaft ein Teilnehmer mit zwei Treibern T10 und T20 untergebracht ist, die über eine Datenleitung 50 angesteuert werden. Die erste Treiberstufe T10 liegt zwischen der Versorgungsspannung U_{B} und einer ersten Ausgangsklemme TX0 des CAN-IC's. Parallel zur ersten Treiberstufe liegt eine Zenerdiode ZD1, deren Kathode ebenfalls an der Versorgungsspannung liegt. Angesteuert wird die erste Treiberstufe T10 über einen Inverter 51, der mit der Datenleitung 50 verbunden ist. Die zweite Treiberstufe T20, der ebenfalls eine Zenerdiode ZD2 parallel geschaltet ist, wird unmittelbar über die Datenleitung 50 angesteuert. Die zweite Treiberstufe T20 liegt zwischen einer zweiten Ausgangsklemme TX1 und Masse. Die beiden Treiberstufen werden invers geschaltet.

Vorzugsweise werden für die Treiberstufen elektronische Schalter, beispielsweise CMOS-Schalter verwendet.

Die Treiberstufen sind hochohmig, hier über Widerstände R1 und R2 von vorzugsweise 1kΩ an die Busleitungen "0" und "1" angekoppelt. Zusätzlich sind Entkopplungsdioden vorgesehen, wobei an der Klemme TX0 die Anode der ersten Entkopplungsdiode D1 angeschlossen ist und an der Ausgangsklemme TX1 die Kathode der zweiten Diode D2.

Die Busleitungen "0" und "1" sind an eine geeignete Abschlußeinheit angeschlossen, die hier einen Impedanzwandler und einen Ankopplungswiderstand pro Busleitung aufweist. Der erste Impedanzwandler OP1 der Busleitung "0" liegt an einer vorwählbaren Spannung von beispielsweise 1,5V. Der Ankopplungswiderstand R3 hat beispielsweise einen Wert von 2kΩ. Der Impedanzwandler OP2 der Busleitung "1" liegt an einer vorwählbaren Spannung von beispielsweise 3,5V. Ihm ist ein Ankopplungswiderstand R4 von 2kΩ nachgeschaltet.

Als Potentiale für die Busleitungen werden vorzugsweise Spannungen gewählt, die ansonsten in der Schaltung nicht vorkommen. Die Werte von 0V und 5V werden also möglichst vermieden. Statt 1,5V und 3,5V können aber auch beispielsweise 1V und 4V für die Busleitungen gewählt werden.

Die Signalauswertung erfolgt auch hier mittels einer an den Klemmen RX0 und RX1 angeschlossenen Signalauswertungs- bzw. Eingangsschaltung, die einen Komparator K aufweist. Die Anschlußklemme RX0 ist über einen hochohmigen Ankopplungswiderstand R5 von vorzugsweise 150kΩ mit der Busleitung "0" verbunden. Die Anschlußklemme RX1 ist über einen Ankopplungswiderstand R6 mit gleichem Wert an die Busleitung "1" angeschlossen. Auf dem CAN-IC wird die Notlauf-Spannung U_{B}/2 erzeugt und über einen Impedanzwandler 52 an die Ausgangsklemme NL gelegt. Sowohl die Klemme RX0 als auch die Klemme RX1 sind mit der Ausgangsklemme NL verbunden und zwar über einen Vorwiderstand R7 bzw. R8, deren Wert bei diesem Ausführungsbeispiel auf 15kΩ festgelegt ist. Die Widerstände R7 und R8 dienen der Ruhepotentialeinstellung des Komparators K. Durch die Beschaltung ist hier sichergestellt, daß der Potential der Klemme NL etwa in der Mitte zwischen den Potentialen der Busleitungen liegt.

Die Verbindungsleitung 53 des Inverters 52 mit der Anschlußklemme NL ist über einen ersten Analogschalter 211 mit der Verbindungsleitung des Komparators mit der Klemme RX0 verbunden und über einen zweiten Analogschalter 212 mit der Verbindungsleitung des Komparators K mit der Klemme RX1. Als Analogschalter können auch hier beispielsweise FET-Schalter verwendet werden, deren Innenwiderstand kleiner als 100Ω ist. Der erste Analogschalter 211 ist über eine Leitung 213 mit dem ersten Element eines Statusregisters 215 und der zweite Analogschalter 212 über eine Leitung 214 mit dem zweiten Element des Statusregisters 215 verbunden.

Die beiden Analogschalter 211 und 212 sowie der Inverter 52 sind Teil der Notlaufschaltung 210.

Die Überwachungsschaltung 100 ist hier als Vorschalt-IC ausgebildet, der über die Klemmen P1 und P2 mit dem CAN-IC verbunden ist. Die Notlaufschaltung 100 wird einerseits von der Spannung U_{B} versorgt und liegt andererseits an Masse.

Die Notlaufschaltung 100 umfasst einen ersten Fensterkomparator FK1, der über einen ersten Ankopplungswiderstand R9 mit der Busleitung "0" verbunden ist. Er liegt andererseits an der Klemme P1. Ein zweiter Fensterkomparator FK2 steht über einen Ankopplungswiderstand R10 mit der Busleitung "1" in Verbindung und liegt andererseits an der Klemme P2.

Der Spannungsbereich der Fensterkomparatoren FK1 und FK2 richtet sich nach den an den Busleitungen liegenden Spannungen bzw. nach den im Fehlerfall auftretenden Potentialen. Bei einem Kurzschluß mit Masse liegen die Busleitungen an 0V bei einem Kurzschluß mit der Spannungsversorgung auf 5V. Der Spannungsbereich der Fensterkomparatoren liegt daher im Bereich von 1V bis 4V.

Sobald die Spannung an einer Busleitung außerhalb des vorgewählten Spannungsbereichs eines Fensterkomparators liegt, gibt dieser ein Fehlersignal an die zugehörige Klemme P1 bzw. P2 ab. Um Fehlersignale zu vermeiden, die nicht auf Störungen des Busses beruhen, sondern darauf, daß zufällig mehrere Treiberschaltungen gleichzeitig durchgeschaltet haben, sind den Fensterkomparatoren FK1 und FK2 Totzeitglieder, beispielsweise RC-Glieder zugeordnet, deren Totzeit T1 etwa 300 µs beträgt.

Die Klemme P1 ist über eine Steuerleitung 216 mit dem ersten Element des Statusregisters 215 verbunden und die Klemme P2 über eine Steuerleitung 217 mit dessen zweiten Element.

Bei Kurzschluß einer Busleitung nach Masse oder U_{B} oder bei Defekt eines Treibertransistors liegt das Potential der betroffenen Busleitung außerhalb des Spannungsbereichs des zugehörigen Fensterkomparators. Wenn dieser Fehlerzustand länger als 300 µs andauert, gibt der entsprechende Fensterkomparator ein Steuersignal an die zugehörige Klemme P1 bzw. P2 ab. Auf diese Weise wird bei einem Fehler auf der Busleitung "0" ein Signal des Fensterkomparators FK1 über die Klemme P1 und die erste Steuerleitung 216 an das erste Element des Statusregisters 215 abgegeben. Daraufhin wird ein STATUS BIT über die Leitung 217 dem ersten Analogschalter 211 zugeführt, der im vorliegenden Fall als Schließer ausgebildet ist. Das heißt, die Notlauf-Spannung U_{B}/2 wird an die Verbindungsleitung des Komparators K mit der Klemme RX0 gelegt.

Bei einem Fehler auf der Busleitung "1" wird ein entsprechendes Steuersignal des Fensterkomparators FK2 über die Klemme P2 und über die zweite Steuerleitung 217 an das zweite Element des Statusregisters 215 gelegt. Dieser gibt ein Status bit ab, das über die Leitung 214 an den zweiten Analogschalter 212 gelegt wird, der ebenfalls als Schließer wirkt. Dadurch wird die Verbindungsleitung des Komparators K mit der Klemme RX1 an die Spannung U_{B}/2 gelegt.

Bei dem Ausführungsbeispiel in Figur 6 werden die an den Klemmen P1 und P2 liegenden Signale unmittelbar an das Statusregister 215 weitergeleitet. Durch die gestrichelte Darstellung der Leitungen 216 und 217 soll aber klargestellt werden, daß die Auswertung der an den Klemmen P1 und P2 liegenden Informationen und die Ansteuerung des Statusregisters 215 auch mit Hilfe von Software erfolgen kann.

Anhand von Figur 3 ist ersichtlich, daß der Komparator K nur dann auswertbare Signale abgibt, wenn die Differenz der am Komparator anliegenden Spannungen einen Nulldurchgang aufweist. Dies ist bei Ausfall bzw. bei einer Störung einer der Busleitungen nicht mehr gewährleistet. Dadurch aber, daß eine der Eingangsleitungen des Komparators mit Hilfe der Analogschalter 211 und 212 im Fehlerfall zwangsweise auf U_{B}/2 gelegt wird, ist sichergestellt, daß der Komparator wieder auswertbare Ausgangssignale liefert.

Anhand der Fehlersignale der Fensterkomparatoren FK1 und FK2 kann festgestellt werden, welche der Busleitungen defekt ist. Mit Hilfe dieser Schaltung wird also nicht nur ein Notbetrieb aufrechterhalten sondern auch die Möglichkeit geschaffen, die fehlerhafte Busleitung zu erfassen.

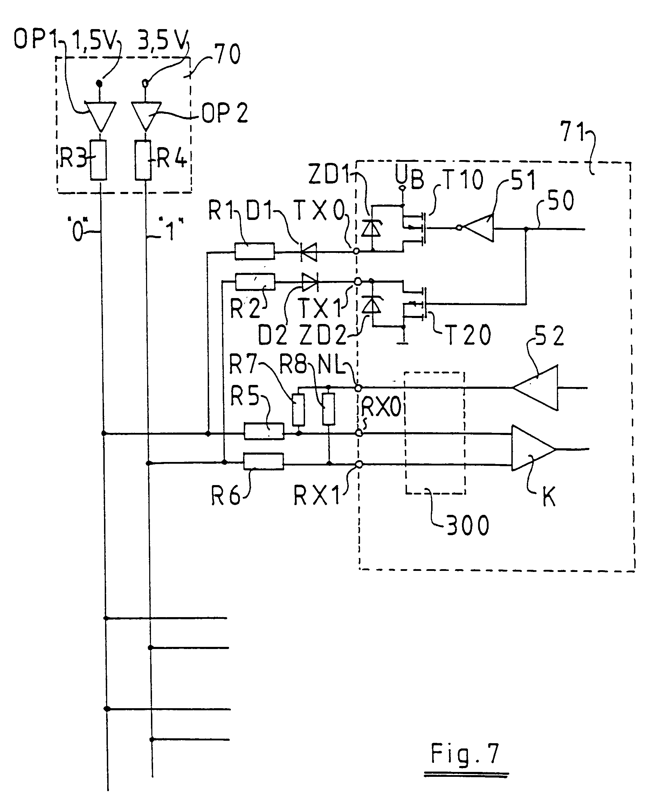

In Figur 7 ist nochmals ein Funktionsschaltbild dargestellt, das zwei Busleitungen "0" und "1" wiedergibt. An die Busleitungen ist eine Abschlußeinheit 70 angeschlossen, die, wie in Figur 6 beschrieben, einen ersten Operationsverstärker OP1 sowie einen Ankopplungswiderstand R3 für die Busleitung "0" sowie einen zweiten Operationsverstärker OP2 mit einem zugehörigen Widerstand R4 aufweist. Bei diesem Ausführungsbeispiel ist der ersten Busleitung "0" ein Potential von 1,5V und der zweiten Busleitung "1" ein Potential von 3,5V zugeordnet.

An die Busleitungen können mehrere Systeme bzw. Subsysteme angeschlossen werden, von denen eines hier dargestellt und mit dem Bezugszeichen 71 versehen ist.

Die an die Klemmen TX0 und TX1 angeschlossenen Treiberstufen T10 und T20 sind identisch mit denen in Figur 6. Gleiche Teile sind mit gleichen Bezugszeichen versehen, auf ihre ausführliche Beschreibung wird hier daher verzichtet.

Bei dem Teilnehmer 71 handelt es sich hier wieder um ein CAN-IC. Auf dem IC wird, wie in Figur 6, die Notlauf-Spannung U_{B}/2 erzeugt, die über einen Impedanzwandler 52 an die Klemme NL des IC gelegt wird. Die Busleitung "0" ist über einen Kopplungswiderstand R5 von 150kΩ mit der Klemme RX0 des IC's verbunden. Die Busleitung "1" ist über einen Kopplungswiderstand R6 von 150kΩ mit der Klemme RX1 des IC's verbunden. Zur Einstellung des Ruhepotentials einer einen Komparator K aufweisenden Signalauswertungs- bzw. Empfängerschaltung, die auf dem IC vorgesehen und an den Klemmen RX0 und RX1 angeschlossen ist, ist ein erster Widerstand R7 von 15kΩ mit der Klemme NL und der Klemme RX0 sowie ein zweiter Widerstand R8 von beispielsweise 15kΩ mit der Klemme RX1 und der Klemme NL des IC's verbunden. Die in Figur 6 dargestellte Überwachungsschaltung 100 sowie die Notlauf-Schaltung 210 sind hier in Figur 7 zu einem Block, der Bus-Monitorschaltung 300, zusammengefaßt.

Während in Figur 6 die Überwachungsschaltung 100 dem gestrichelt dargestellten Teilnehmer vorgeschaltet ist, ist dieser Schaltungsteil in Figur 7 auf dem CAN-IC angeordnet.

Das Ausführungsbeispiel gemäß Figur 7 zeichnet sich durch seinen einfachen und übersichtlichen Aufbau aus. Die einzelnen Baugruppen sind also sehr kompakt und einfach an die Busleitungen anzuschließen.

Aus Gründen der Übersichtlichkeit sind in Figur 7 weitere Teilnehmer nicht dargestellt. Es sind lediglich deren Anschlußleitungen angedeutet.

Die Funktion der Schaltung in Figur 7 ist identisch mit der in Figur 6 . Das heißt also Fehler auf einer der Busleitungen werden vom Busmonitor 300 erkannt. Im Falle eines Fehlers wird die Notlauf-Spannung an den der fehlerhaften Busleitung zugeordneten Eingang des Komparators K gelegt.

Nach allem ist also deutlich, daß durch die hier beschriebene CAN-Schnittstelle auch bei Ausfall einer von zwei Busleitungen der Schnittstellenbetrieb aufrechterhalten werden kann. Es ist allerdings festzuhalten, daß die sogenannten Gleichtaktstörungen während des Notlaufbetriebs nicht unterdrückt werden können.

## Patentansprüche

1. Netzwerkschnittstelle für den Einsatz in einer Teilnehmerstation eines lokalen Computer-Netzwerks, insbesondere in Kraftfahrzeugen, wobei mindestens zwei Teilnehmerstationen über einen Zweidraht-Bus miteinander verbunden sind, mit einem Komparator (1) als Differenzempfänger, dessen Eingänge an die beiden Busleitungen ("1", "0") des Zweidraht-Busses, auf denen jeweils komplementäre Signale übertragen werden, angeschlossen sind, mit einer an den Ausgang des Komparators (1) angeschlossenen Überwachungsschaltung (10, 100), die die Funktionsfähigkeit der Busleitungen ("1", "0") überprüft, mit einer Notlaufschaltung (20, 200, 210), die abhängig von den Signalen der Überwachungsschaltung (10, 100) aktiviert wird, dadurch gekennzeichnet, daß die Überwachungsschaltung (10, 100) einen Zähler (11) aufweist, der durch auf den Busleitungen ("0", "1") eintreffende Signale zurückgesetzt wird und der bei Erreichen eines vorgebbaren Zählerstands die Notlaufschaltung (20, 200, 210) aktiviert, daß die Notlaufschaltung (20, 200, 210) erste Mittel enthält, die zum Wiederherstellen der Übertragung in einem ersten Schritt einen ersten Eingang (RX0, RX1) des Komparators (1) auf ein vordefiniertes Potential legen, daß danach bei Ausbleiben einer Fehlererkennung seitens der Überwachungsschaltung (10, 100) der Informationsempfang über die nicht mit dem vordefinierten Potential beaufschlagte Eingangsleitung (RX0, RX1) stattfindet, daß die Notlaufschaltung (20, 200, 210) zweite Mittel enthält, die bei weiterer Fehlererkennung seitens der Überwachungsschaltung (10, 100) in einem zweiten Schritt den zweiten Eingang (RX0, RX1) des Komparators (1) auf ein vordefiniertes Potential legen und die verbindung des ersten Eingangs (RX0, RX1) mit dem vordefinierten Potential lösen, daß danach bei Ausbleiben einer Fehlererkennung seitens der Überwachungsschaltung (10, 100) der Informationsempfang über die nicht mit dem vordefinierten Potential beaufschlagte Eingangsleitung (RX0, RX1) stattfindet.

2. Netzwerkschnittstelle nach Anspruch 1, dadurch gekennzeichnet, daß die Überwachungsschaltung (100) mindestents je einen einer Busleitung ("0", "1") zugeordneten Fensterkomparator (FK1, FK2) aufweist, der ein Steuersignal an die Notlaufschaltung (210) abgibt, wenn das an einer Busleitung ("0", "1") liegende Potential außerhalb eines vorgebbaren Bereichs liegt.

3. Netzwerkschnittstelle nach Anspruch 2, dadurch gekennzeichnet, daß zur Vermeidung falscher Steuersignale eines Fensterkomparators (FK1, FK2) aufgrund kurzzeitiger Potentialschwankungen eine Totzeit vorgesehen ist, innerhalb derer Potentialschwankungen nicht berücksichtigt werden.

4. Netzwerkschnittstelle nach Anspruch 3, dadurch gekennzeichnet, daß die Totzeit durch ein zwischen Fensterkomparator (FK1, FK2) und Notlaufschaltung (210) geschaltetes RC-Glied einstellbar ist.

5. Netzwerkschnittstelle nach einem der Ansprüche 2 bis 4, dadurch gekennzeichnet, daß den Fensterkomparatoren (FK1, FK2) zur Steuerung der Notlaufschaltung (210) ein Statusregister (215) zugeordnet ist, das von den Ausgangssignalen der Fensterkomparatoren (FK1, FK2) gesetzt wird.

6. Netzwerkschnittstelle nach einem der vorhergehenden Ansprüche, dadurch gekennzeichnet, daß die Notlaufschaltung (20, 200, 210) elektrische und/oder elektronische Schalter (21, 22; 201, 202, 204, 205; 211, 212) aufweist, die von Status-Bits aktiviert werden, die von dem Zähler (11) bei Erreichen des vorgebbaren Zählerstands gesetzt werden, und daß die elektrischen und/oder elektronischen Schalter (21, 22; 201, 202, 204, 205; 211, 212) im aktivierten Zustand den zugehörigen Eingang (RX0, RX1) des Komparators (1) mit einer Notlauf-Spannungsquelle (U_{B}/2) verbinden.

7. Netzwerkschnittstelle nach Anspruch 6, dadurch gekennzeichnet, daß je einem Eingang (RX0, RX1) des Komparators (1) zwei elektronische Schalter (201, 202; 203, 204) zugeordnet sind, die komplementär wirken, so daß sie im aktivierten Zustand den zugehörigen Eingang (RX0, RX1) mit einer Notlauf-Spannungsquelle (U_{B}/2) verbinden und gleichzeitig die Verbindung zur zugehörigen, gestörten Busleitung ("0", "1") unterbrechen.

8. Netzwerkschnittstelle nach Anspruch 6, dadurch gekennzeichnet, daß die Schalter (21, 22; 202, 203, 204; 211, 212) als Analogschalter ausgebildet sind.

9. Netzwerkschnittstelle nach Anspruch 8, dadurch gekennzeichnet, daß als Analogschalter FET-Schalter verwendet werden.

10. Netzwerkschnittstelle nach einem der Ansprüche 2 bis 5, dadurch gekennzeichnet, daß die Fensterkomparatoren (FK1, FK2) auf das vordefinierte Potential eingestellt sind.

11. Netzwerkschnittstelle nach einem der vorhergehenden Ansprüche, dadurch gekennzeichnet, daß die Überwachungsschaltung (10, 110) und die Notlaufschaltung (20, 220, 210) zu einer Bus-Monitor-Schaltung (300) zusammenfaßbar sind.

12. Netzwerkschnittstelle nach Anpruch 11, dadurch gekennzeichnet, daß die Bus-Monitor-Schaltung (300) auf dem Chip der Netzwerkschnittstelle integriert ist.

## Claims

1. Network interface for use in a subscriber station of a local area computer network, in particular in motor vehicles, in which at least two subscriber stations are connected to one another via a two-wire bus, having a comparator (1) as differential receiver, the inputs of which are connected to the two bus lines ("1", "0") of the two-wire bus, on which lines complementary signals are transmitted in each case, having a supervision circuit (10, 100) which is connected to the output of the comparator (1) and monitors the functioning of the bus lines ("1", "0"), having an emergency circuit (20, 200, 210) which is activated depending on the signals of the supervision circuit (10, 100), characterized in that the supervision circuit (10, 100) has a counter (11) which is reset by signals arriving on the bus lines ("0", "1") and which activates the emergency circuit (20, 200, 210) when a specifiable counter reading is reached, in that the emergency circuit (20, 200, 210) contains first means which, for re-establishing the transmission, in a first step connect a first input (RX0, RX1) of the comparator (1) to a predefined potential, in that following this, if no error is detected by the supervision circuit (10, 100), the information reception takes place via the input line (RX0, RX1) not receiving the predefined potential, in that the emergency circuit (20, 200, 210) contains second means which, if a further error is detected by the supervision circuit (10, 100), in a second step connect the second input (RX0, RX1) of the comparator (1) to a predefined potential and release the connection of the first input (RX0, RX1) to the predefined potential, in that following this, if no error is detected by the supervision circuit (10, 100), the information reception takes place via the input line (RX0, RX1) not receiving the predefined potential.

2. Network interface according to Claim 1, characterized in that the supervision circuit (100) has at least one window comparator (FK1, FK2) assigned to a bus line ("0", "1") in each case, which comparator outputs a control signal to the emergency circuit (210) when the potential applied to a bus line ("0", "1") is outside a specifiable range.

3. Network interface according to Claim 2, characterized in that, for avoiding erroneous control signals of a window comparator (FK1, FK2) as a result of brief potential fluctuations, a dead time is provided, within which potential fluctuations are ignored.

4. Network interface according to Claim 3, characterized in that the dead time can be set by an RC element connected between window comparator (FK1, FK2) and emergency circuit (210).

5. Network interface according to one of Claims 2 to 4, characterized in that a status register (215), which is set by the output signals of the window comparators (FK1, FK2), is assigned to the window comparators (FK1, FK2) for controlling the emergency circuit (210).

6. Network interface according to one of the preceding claims, characterized in that the emergency circuit (20, 200, 210) has electrical and/or electronic switches (21, 22; 201, 202, 204, 205; 211, 212) activated by status bits which are set by the counter (11) when the specifiable counter reading is reached, and in that in the activated state the electrical and/or electronic switches (21, 22; 201, 202, 204, 205; 211, 212) connect the associated input (RX0, RX1) of the comparator (1) to an emergency voltage source (U_{B}/2).

7. Network interface according to Claim 6, characterized in that assigned to one input (RX0, RX1) of the comparator (1) in each case are two electronic switches (201, 202; 203, 204) which act in a complementary fashion, so that in the activated state they connect the associated input (RX0, RX1) to an emergency voltage source (U_{B}/2) and simultaneously interrupt the connection to the associated faulty bus line ("0", "1").

8. Network interface according to Claim 6, characterized in that the switches (21, 22; 202, 203, 204; 211, 212) are designed as analog switches.

9. Network interface according to Claim 8, characterized in that FET switches are used as analog switches.

10. Network interface according to one of Claims 2 to 5, characterized in that the window comparators (FK1, FK2) are set to the predefined potential.

11. Network interface according to one of the preceding claims, characterized in that the supervision circuit (10, 110) and the emergency circuit (20, 220, 210) can be combined to form a bus monitor circuit (300).

12. Network interface according to Claim 11, characterized in that the bus monitor circuit (300) is integrated on the chip of the network interface.

## Revendications

1. Interface de réseau applicable à un poste participant appartenant à un réseau local d'ordinateur notamment dans des véhicules automobiles, dans lequel au moins deux postes participants sont reliés par un bus à deux fils, interface comprenant un comparateur (1) comme récepteur de différence dont les entrées sont reliées aux deux lignes de bus ("1" et "0") du bus à deux fils, et qui transmettent respectivement des signaux complémentaires, avec un circuit de surveillance (10, 100) relié à l'une des sorties du comparateur (1) et qui vérifie l'aptitude au fonctionnement des lignes de bus ("1", "0"), avec un circuit de secours (20, 200, 210) activé indépendamment des signaux du circuit de surveillance (10, 100), interface caractérisée en ce que le circuit de surveillance (10, 100) comporte un compteur (11) qui est remis à l'état initial par les signaux arrivant par les lignes de bus ("0", "1") et qui, lorsqu'il atteint un état de comptage prédéterminé, active le circuit de secours (20, 200, 210) pour que le circuit de secours (20, 200, 210) comporte les premiers moyens servant à rétablir la transmission dans un premier point de coupure, une première entrée (RX0, RX1) du comparateur (1) étant mise à un potentiel prédéfini, et en ce qu'après disparition d'une reconnaissance d'erreur du côté du circuit de surveillance (10, 100), le récepteur d'informations forme, par la ligne d'entrée (RX0, RX1) non sollicitée par le potentiel prédéfini, le circuit de secours (20, 200, 210) comportant des seconds moyens qui, en cas d'autres reconnaissances d'erreur du côté du circuit de surveillance (10, 20), appliquent dans une seconde étape la seconde entrée (RX0, RX1) du comparateur (1) à un potentiel prédéfini et ouvrent la liaison de la première entrée (RX0, RX1) avec le potentiel prédéfini et en ce qu'ensuite en cas d'absence d'une reconnaissance d'erreur du côté du circuit de surveillance (10, 100), l'information chemine par la ligne d'entrée, qui ne reçoit pas le potentiel prédéterminé (RX0, RX1).

2. Interface de réseau selon la revendication 1, caractérisée en ce que le circuit de surveillance (100) comprend au moins un comparateur à fenêtre (FK1, FK2) associé à chacune des lignes de bus ("0", "1"), ce comparateur émettant un signal de commande vers le circuit de secours (210) lorsque le potentiel appliqué à une ligne de bus ("0", "1") se trouve à l'extérieur d'une plage de potentiels prédéterminée.

3. Interface de réseau selon la revendication 2, caractérisée en ce que, pour éviter de mauvais signaux de commande d'un comparateur à fenêtre (FK1, FK2) qui pourraient résulter de variations de potentiel de court-circuit, il est prévu une temporisation pendant laquelle les variations de potentiel ne sont pas prises en compte.

4. Interface de réseau selon la revendication 3, caractérisée en ce que la temporisation est réglée par un élément RC branché entre le comparateur à fenêtre (FK1, FK2) et le circuit de secours (210).

5. Interface de réseau selon l'une des revendications 2 à 4, caractérisée en ce qu'un registre d'état (215) est associé au comparateur à fenêtre (FK1, FK2) pour commander le circuit de secours (210), ce registre d'état étant mis à l'état par les signaux de sortie du comparateur à fenêtre (FK1, FK2).

6. Interface de réseau selon l'une des revendications précédentes, caractérisée en ce que le circuit de secours (20, 200, 210) comporte des commutateurs électriques et/ou électroniques (21, 22, 201, 202, 204, 205, 211, 212) activés par des bits d'état mis à l'état par le compteur (11) avant qu'ils n'atteignent l'état de comptage prédéterminé, et les commutateurs électriques et/ou électroniques (21, 22 ; 201, 202 ; 204, 205 ; 211, 212) relient, à l'état activé, l'entrée correspondante (RX0, RX1) du comparateur (1) à une source de tension de secours (U_{B}/2).

7. Interface de réseau selon la revendication 6, caractérisée en ce qu'à chacune des entrées (RX0, RX1) du comparateur (1) sont associés deux commutateurs électroniques (201, 202, 203, 204) à fonctionnement complémentaire de manière qu'à l'état activé elle relie l'entrée correspondante (RX0, RX1) à une source de tension de secours (U_{B}/2) et coupe en même temps la liaison vers la ligne de bus correspondante dérangée ("0", "1").

8. Interface de réseau selon la revendication 6, caractérisée en ce que le commutateur (21, 22, 202, 203, 204, 211, 212) est un commutateur analogique.

9. Interface de réseau selon la revendication 8, caractérisée en ce que le commutateur analogique est un composant FET.

10. Interface de réseau selon l'une des revendications 2 à 5, caractérisée en ce que les comparateurs à fenêtre (FK1, FK2) sont réglés à un potentiel déterminé.

11. Interface de réseau selon l'une des revendications précédentes, caractérisée en ce que le circuit de surveillance (10, 110) et le circuit de secours (20, 220, 210) sont réunis en un seuil circuit de contrôle (300).

12. Interface de réseau selon la revendication 11, caractérisée en ce que le circuit de moniteur-bus (300) est intégré sur la microplaquette de l'interface de réseau.
